# EUROPÄISCHE PATENTANMELDUNG

(11) **EP 3 862 583 A1**
(43) Veröffentlichungstag der Anmeldung: **11.08.2021**
(21) Anmeldenummer: 21153022.5
(22) Anmeldetag: 22.01.2021
(51) Int. Cl.: F16B 19/14, F16B 33/06

(54) **FÜGEELEMENT, VERBINDUNGSSTRUKTUR MIT DEM FÜGEELEMENT, HERSTELLUNGSVERFAHREN DES FÜGEELEMENTS UND ENTSPRECHENDES VERBINDUNGSVERFAHREN**

(30) Priorität: 05.02.2020 DE 102020102982
(71) Anmelder: Böllhoff Verbindungstechnik GmbH, 33649 Bielefeld (DE)
(72) Erfinder: Junklewitz, Daniel, 33106 Paderborn (DE); Henke, Dennis, 33442 Herzebrock-Clarholz (DE)
(74) Vertreter: HWP Intellectual Property

(57) **Zusammenfassung**

Die vorliegende Erfindung betrifft ein Fügeelement (1) zum Herstellen einer Verbindung zwischen mindestens zwei Bauteilen, welches aufweist: einen Kopf (10) an einem ersten axialen Ende, einen Endbereich (20) an einem dem ersten axialen Ende gegenüberliegenden zweiten axialen Ende sowie einen zwischen dem Endbereich und dem Kopf angeordneten Schaft (30), der eine Längsachse des Fügeelements zwischen dem ersten und dem zweiten axialen Ende definiert. Erfindungsgemäß weisen mindestens der Schaft und der Endbereich des Fügeelements eine gehärtete Randschicht auf, so dass ein Material des Schafts und des Endbereichs im Inneren eine geringere Härte im Vergleich zu einer benachbarten Oberfläche der Randschicht aufweisen.

## Beschreibung

### 1. Gebiet der Erfindung

Die vorliegende Erfindung betrifft ein Fügeelement zum Herstellen einer Verbindung zwischen mindestens zwei Bauteilen, eine Verbindungsstruktur aus mindestens einem ersten und einem zweiten Bauteil, die mittels des Fügeelements verbunden sind, ein Herstellungsverfahren des Fügeelements sowie ein Verfahren zum Verbinden mindestens eines ersten Bauteils mit einem zweiten Bauteil mittels des Fügeelements.

### 2. Hintergrund der Erfindung

Fügeelemente zum Herstellen einer Verbindung zwischen zwei Bauteilen umfassen üblicherweise einen Kopf, einen Schaft sowie einen Endbereich. Der spezifische Aufbau des Fügeelements hängt von dem gewünschten Einsatzgebiet ab, so dass Fügeelemente im Stand der Technik in einer Vielzahl unterschiedlicher Ausgestaltungen bekannt sind.

So beschreibt DE 10 2010 025 359 A1 einen Nagel als Fügeelement zum im Wesentlichen drehungsfrei axialen Eintreiben in mindestens ein nicht vorgelochtes Bauteil. Der Nagel als Fügeelement umfasst einen Nagelkopf, einen Nagelschaft und eine Nagelspitze, wobei der Nagelschaft bereichsweise eine Oberflächenprofilierung aufweist. Der Bereich der Oberflächenprofilierung weist entsprechend deren radialen Tiefe eine geringere Härte als der Nagelschaft auf.

Ein weiteres Verbindungselement, insbesondere ein Setzbolzen, zum Verbinden von zumindest zwei Bauteilen ist in DE 10 2014 019 322 A1 offenbart. Das Verbindungselement umfasst einen zugespitzten Bereich und einen Schaftbereich, deren Eigenschaften sich unterscheiden, wobei das Verbindungselement einstückig ausgebildet ist. Beispielsweise hat der zugespitzte Bereich eine höhere Festigkeit als der Schaftbereich.

DE 103 28 197 B3 betrifft ein Befestigungselement wie einen Bolzen oder Nagel. Das Befestigungselement umfasst einen Schaft, an dessen einem Ende eine Spitze und an dessen gegenüberliegenden anderen Ende ein Kopf angeordnet ist. Das Befestigungselement weist eine Kernzone aus einem relativ harten, kohlenstoffhaltigen Stahl und eine ferritische Randzone aus einem weniger harten, kohlenstoffarmen Stahl auf. Zwischen dem Schaft und der Spitze ist ein Übergangsbereich angeordnet, in welchem die Dicke der ferritischen Randzone vom Schaft in Richtung zur Spitze hin graduell bis zu einem Wert gegen Null abnimmt.

Ein weiteres Befestigungselement ist in DE 10 2007 000 485 B3 beschrieben. Das Befestigungselement weist eine innenliegende Kernzone aus einem relativ harten, kohlenstoffhaltigen Stahl und eine relativ zur Kernzone außenliegende Randzone aus einem mit einem ersten Legierungsmetall legierten ersten kohlenstoffarmen austenitischen Stahl auf. Zwischen der Kernzone und der Randzone ist wenigstens eine erste Zwischenzone aus einem zweiten kohlenstoffarmen Stahl angeordnet, der eine geringere Härte aufweist, als der Stahl der Kernzone.

Schließlich offenbart auch US 2003/014260 A1 ein Befestigungselement. Dieses Befestigungselement weist einen ersten spitzentragenden Schaftabschnitt mit einer größeren Härte im Vergleich zu einem nachfolgenden zweiten Schaftabschnitt auf.

Mit den bekannten Fügeelementen können im Rahmen des Hochgeschwindigkeits-Bolzensetzens aktuell Bauteile aus einem Material mit einer Zugfestigkeit von max. 600-800 MPa prozesssicher gefügt werden. Ab dieser Festigkeitsklasse kommt es zur Abtrennung eines Butzens und/oder zum Versagen des Fügeelements. Somit versagen die bekannten Fügeelemente beim translatorischen Setzen in ein im Fügebereich nicht vorgelochtes Bauteil aus hoch- oder höchstfestem Stahl, wobei die Spitze des Elements das Bauteil vollständig durchdringen soll.

Die Aufgabe der vorliegenden Erfindung ist daher, ein Fügeelement bereitzustellen, mit dem das einseitige Fügen von Bauteilen aus einem hoch- oder höchstfesten Stahl mit einer Zugfestigkeit im Bereich von über 800 MPa in einem einstufigen Prozess ohne Versagen des Fügeelements und ohne Abtrennung eines Butzens realisierbar ist. Weiterhin ist es eine Aufgabe der Erfindung, eine entsprechende Verbindungsstruktur, ein Herstellungsverfahren des Fügeelements und ein Verfahren zum Verbinden von zwei Bauteilen bereitzustellen.

### 3. Zusammenfassung der Erfindung

Die obige Aufgabe wird gelöst durch ein Fügeelement gemäß dem unabhängigen Patentanspruch 1, eine Verbindungsstruktur gemäß dem unabhängigen Patentanspruch 6, ein Herstellungsverfahrens eines Fügeelements gemäß dem unabhängigen Patentanspruch 8 sowie ein Verfahren zum Verbinden mindestens eines ersten Bauteils mit einem zweiten Bauteil gemäß dem unabhängigen Patentanspruch 13. Vorteilhafte Ausführungsformen und Weiterentwicklungen ergeben sich aus der nachfolgenden Beschreibung, den Zeichnungen sowie den anhängigen Patentansprüchen.

Ein erfindungsgemäßes Fügeelement zum Herstellen einer Verbindung zwischen mindestens zwei Bauteilen, umfasst: einen Kopf an einem ersten axialen Ende, einen Endbereich an einem dem ersten axialen Ende gegenüberliegenden zweiten axialen Ende sowie einen zwischen dem Endbereich und dem Kopf angeordneten Schaft, der eine Längsachse des Fügeelements zwischen dem ersten und dem zweiten axialen Ende definiert, wobei mindestens der Schaft und der Endbereich des Fügeelements eine gehärtete Randschicht aufweisen, so dass ein Material des Schafts und des Endbereichs im Inneren eine geringere Härte im Vergleich zu einer benachbarten Oberfläche der Randschicht aufweisen.

Das erfindungsgemäße Fügeelement umfasst somit in bekannter Weise einen Kopf, einen Schaft und einen Endbereich. Vorzugsweise sind insbesondere der Endbereich und der Schaft einteilig ausgebildet. Besonders bevorzugt ist das Fügeelement insgesamt einteilig ausgebildet, d.h. der Kopf, der Schaft und der Endbereich. Ebenso besteht das Fügeelement vorzugsweise aus nur einem Material. Dies gilt insbesondere für den Schaft und den Endbereich.

Der Erstreckung des Schafts zwischen Kopf und Endbereich definiert ebenfalls in gewohnter Weise die Längsachse des Fügeelements zwischen dem ersten und dem zweiten axialen Ende, die aufgrund von Lage und Verlauf auch als Mittellängsachse bezeichnet wird. Vorzugsweise ist der Schaft zylindrisch ausgebildet.

Weiterhin weist das erfindungsgemäße Fügeelement die gehärtete Randschicht auf. Der Vorteil dieser gehärteten Randschicht wird nachfolgend anhand eines Setzbolzens als Fügeelement erläutert. In dieser Hinsicht ist das Fügeelement vorzugsweise ausgewählt aus der Gruppe bestehend aus: Setzbolzen, Halbhohl-Stanznieten, Vollstanznieten, Blindnieten und Schrauben.

Nachdem das Fügeelement in gewohnter Weise, beispielsweise mittels Kaltumformung, hergestellt wurde, werden mindestens der Schaft und der Endbereich, vorzugsweise das ganze Fügeelement, beispielsweise ein Setzbolzen, in einem weiteren Prozessschritt randschichtgehärtet. Je nach Werkstoff oder Material des Fügeelements können hohe Randhärten von bis zu 1.200 HV 10 erzielt werden - bei gleichzeitig "weichem und duktilem" Inneren. Bezogen auf den beispielhaften Setzbolzen als Fügeelement ist daher insbesondere der Schaft im Inneren unverändert. In diesem Zusammenhang bezeichnet eine Härte von 1.200 HV 10 eine Härte nach Vickers (HV) von 1.200 bei einer Prüfkraft von 10 Kilopond.

Ein Vorteil dieser randschichtgehärteten Fügeelemente resultiert, wenn das Fügeelement, d.h. beispielsweise der Setzbolzen, in ein Bauteil aus hoch- oder höchstfestem Stahl gesetzt werden soll. So ist das erfindungsgemäße Fügeelement in ein Bauteil aus einem Stahl mit einer Zugfestigkeit von über 800 MPa, vorzugsweise von über 1.200 MPa und besonders bevorzugt bis zu 2.000 MPa oder zumindest bis zu 1.500 MPa ohne Abtrennung eines Butzens und ohne Deformation des Endbereichs einbringbar.

Neben der Erweiterung des Prozessfensters liegt zudem eine erhöhte Kerbschlagarbeit und somit Duktilität vor, die auf das weiche Innere des Fügeelements im Vergleich zur gehärteten Randschicht zurückführbar ist. Die Kerbschlagarbeit oder Kerbschlagzähigkeit ist ein Maß für die schlagartige und/oder dynamische Beanspruchung des Fügeelements. Diese Beanspruchung tritt neben dem Fügevorgang auch in der späteren Verbindungsstruktur auf, wenn das Fügeelement die mindestens zwei Bauteile unter Bauteilbelastungen zusammenhalten muss. Diese erhöhte Kerbschlagarbeit oder Kerbschlagzähigkeit wirkt sich vorteilhaft im Hinblick auf die mit dem Fügeelement hergestellte Verbindung aus, da beispielsweise größere Temperaturunterschiede bei der Weiterverarbeitung der Verbindung oder mechanische Belastungen der Verbindungsstruktur durch das Fügeelement toleriert werden, ohne dass es zu einer nachteiligen Beeinflussung der Verbindung kommt.

In einer vorteilhaften Ausführungsform des Fügeelementes ist mindestens das Material des Schafts und des Endbereichs vergütet. Auf diese Weise kann die Härte der Randschicht, in Abhängigkeit vom verwendeten Vorgehen zur Erzeugung der Randschicht, im Vergleich zu einem nicht vergüteten Material weiter erhöht werden. Vergüten bezeichnet die kombinierte Wärmebehandlung von Metallen wie Stahl, bestehend aus Härten und anschließendem Anlassen. Voraussetzung für die Vergütung ist somit die Härtbarkeit des verwendeten Stahls, also die Fähigkeit, unter bestimmten Bedingungen ein stabiles Martensit- oder Bainitgefüge zu bilden. Zum Härten selbst ist zunächst ein rasches Aufheizen des Stahls über die Austenitisierungstemperatur notwendig. Danach erfolgt ein Abschrecken des Stahls, also die schnelle Abkühlung des erhitzten Materials, durch den Einsatz von Abschreckungsmitteln, vorzugsweise Wasser, Öl (Polymer-Bad) oder Luft. Abschließend findet ein Anlassen oder Bläuen statt, das eine Wärmebehandlung darstellt, in der der Stahl gezielt erwärmt wird, um seine Eigenschaften zu beeinflussen, insbesondere um Spannungen abzubauen.

Weiterhin bevorzugt wurde die Härtung der Randschicht erzielt mittels Nitrieren, Induktionshärten, Flammhärten, Laserstrahlhärten, Elektronenstrahlhärten oder Aufkohlen. Hierbei ist das Nitrieren besonders bevorzugt und zwar insbesondere das Gasnitrieren. Gerade mit dem Nitrieren können die zu härtenden Fügeelemente als Schüttgut verarbeitet werden, so dass sich neben vorteilhaften Prozesszeiten auch eine wirtschaftliche Vorgehensweise ergibt.

In einer alternativ bevorzugten Ausführungsform des Fügeelements weist mindestens der Schaft und der Endbereich des Fügeelements, vorzugsweise das gesamte Fügeelement, eine Beschichtung mit einem Material auf, das eine größere Härte als das Material des Schafts und des Endbereichs bereitstellt. Anstelle der Verwendung des Materials des Fügeelements wird hier eine separate Beschichtung zur Erzeugung der gehärteten Randschicht verwendet. Die sich ergebenden technischen Effekte entsprechen vorzugsweise den bereits oben diskutierten technischen Effekten.

Eine erfindungsgemäße Verbindungsstruktur besteht aus mindestens einem ersten Bauteil und einem zweiten Bauteil, die mittels eines erfindungsgemäßen Fügeelements verbunden sind. Bezüglich der sich ergebenden Vorteile und technischen Effekte wird daher auf die obigen Ausführungen zum erfindungsgemäßen Fügeelement verwiesen, um unnötige Wiederholungen zu vermeiden.

In einer bevorzugten Ausführungsform der Verbindungsstruktur sind das erste Bauteil benachbart zum Kopf und das zweite Bauteil benachbart zum Endbereich des Fügeelements angeordnet, wobei das zweite Bauteil aus einem Stahl, insbesondere einem Warmumformstahl, mit einer Zugfestigkeit von mindestens 800 MPa, insbesondere mit einer Zugfestigkeit zwischen 800 MPa und 2.000 MPa oder zumindest zwischen 800 MPa und 1.500 MPa, besteht. Gerade die spezifische Ausgestaltung mit dem äußeren harten Randbereich und dem im Vergleich dazu weicheren Kern des erfindungsgemäßen Fügeelements realisiert, dass kein Butzen aus dem zweiten Bauteil aus Stahl mit einer Zugfestigkeit von mindestens 800 MPa abgetrennt wird. Auf diese Weise wird daher auch eine nachteilige Geräuschentwicklung vermieden.

Ein erfindungsgemäßes Herstellungsverfahren eines erfindungsgemäßen Fügeelements umfasst die folgenden Schritte: Bereitstellen des Fügeelements, insbesondere Kaltumformen oder Drehen, mit einem Kopf an einem ersten axialen Ende, einem Endbereich an einem dem ersten axialen Ende gegenüberliegenden zweiten axialen Ende sowie einem zwischen dem Endbereich und dem Kopf angeordneten Schaft, der eine Längsachse des Fügeelements zwischen dem ersten und dem zweiten axialen Ende definiert, und Härten mindestens des Schafts und des Endbereichs des Fügeelements, so dass der Schaft und der Endbereich eine gehärtete Randschicht aufweisen, wodurch ein Material des Schafts und des Endbereichs im Inneren eine geringere Härte im Vergleich zu einer radial benachbarten Oberfläche aufweisen. Mittels des erfindungsgemäßen Herstellungsverfahrens wird das oben beschriebene erfindungsgemäße Fügeelement hergestellt. Hinsichtlich der Vorteile und der sich ergebenden technischen Effekte wird daher auf die obigen Ausführungen verwiesen, um Wiederholungen zu vermeiden.

In einer bevorzugten Ausführungsform des Herstellungsverfahrens weist dieses vor dem Härten des Fügeelements den weiteren Schritt auf: Vergüten von mindestens dem Schaft und dem Endbereich des Fügeelements. Ein Vorteil dieser Vorgehensweise ist, dass die Härte der späteren Randschicht, insbesondere bei Verwendung eines Verfahrens wie Nitrieren, weiter erhöht werden kann im Vergleich zu einem nicht vergüteten Material für das Fügeelement.

Es ist ebenso bevorzugt, dass das Herstellungsverfahren im Rahmen des Härtens folgendes umfasst: Nitrieren, Induktionshärten, Flammhärten, Laserstrahlhärten, Elektronenstrahlhärten oder Aufkohlen oder Aufbringen einer Beschichtung mindestens am Schaft und Endbereich des Fügeelements. Hinsichtlich der Vorteile der jeweiligen Verfahren wird auf die obigen Ausführungen verwiesen.

Vorteilhafterweise umfasst ein Material für das Fügeelement einen kaltumformbaren Stahl. Auf diese Weise lässt sich kostengünstig beispielsweise ein Setzbolzen als Fügeelement mittels Kaltumformen herstellen.

Ein erfindungsgemäßes Verfahren zum Verbinden mindestens eines ersten Bauteils mit einem zweiten Bauteil mittels eines erfindungsgemäßen Fügeelements umfasst die Schritte: Anordnen des ersten und des zweiten Bauteils übereinander, Setzen des Fügeelements in die Anordnung aus übereinander angeordnetem erstem und zweitem Bauteil, wobei das Setzen des Fügeelements vorzugsweise im Wesentlichen drehungsfrei erfolgt. Das im Wesentlichen drehungsfreie Setzen kann auch als ausschließlich translatorisches Setzen des Fügeelements bezeichnet werden. Dieses Setzen erfolgt in die im Fügebereich nicht vorgelochten und miteinander zu verbindenden Bauteile. Am Ende des Setzvorgangs hat der Endbereich des Fügeelements, in Abhängigkeit von dem verwendeten Fügeelement, vorzugsweise beide Bauteile durchdrungen, mindestens aber das kopfzugewandte Bauteil. Bezüglich der sich ergebenden Vorteile wird auf die obigen Ausführungen zum erfindungsgemäßen Fügeelement verwiesen, um Wiederholungen zu vermeiden.

Vorzugsweise sind das erste Bauteil benachbart zum Kopf und das zweite Bauteil benachbart zum Endbereich des Fügeelements angeordnet, wobei das zweite Bauteil aus einem Stahl, insbesondere einem Warmumformstahl, mit einer Zugfestigkeit von mindestens 800 MPa, insbesondere mit einer Zugfestigkeit zwischen 800 MPa und 2.000 MPa oder zumindest zwischen 800 MPa und 1.500 MPa, besteht. Wie eingangs dargelegt besteht bei einem solchen Bauteil das Risiko, dass der Endbereich des Fügeelements plastisch deformiert wird. Dieses Risiko wird aufgrund der gehärteten Randschicht minimiert oder vorzugsweise beseitigt.

In einer bevorzugten Ausführungsform des Verfahrens sind das erste Bauteil benachbart zum Kopf und das zweite Bauteil benachbart zum Endbereich des Fügeelements angeordnet, wobei ein Durchdringen des zweiten Bauteils ohne Abtrennung eines Stanzbutzens erfolgt. Gerade die spezifische Ausgestaltung mit dem äußeren harten Randbereich und dem im Vergleich dazu weicheren Kernmaterial des erfindungsgemäßen Fügeelements ermöglicht es, dass kein Butzen aus dem zweiten Bauteil aus Stahl mit einer Zugfestigkeit von mindestens 800 MPa abgetrennt wird. Auf diese Weise wird daher auch eine nachteilige Geräuschentwicklung vermieden.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: einen Querschnitt eines Fügeelements,
- Figur 2: eine perspektivische Ansicht eines in ein Bauteil aus hoch- oder höchstfestem Stahl gesetzten Fügeelements,
- Figur 3: eine perspektivische Ansicht eines in ein Bauteil aus hoch- oder höchstfestem Stahl gesetzten Fügeelements,
- Figur 4: eine perspektivische Ansicht eines in ein Bauteil aus hoch- oder höchstfestem Stahl gesetzten Fügeelements gemäß einer Ausführungsform der Erfindung,
- Figur 5: ein Schliffbild eines Endbereichs einer Ausführungsform des erfindungsgemäßen Fügeelements,
- Figur 6: ein Diagramm zur Verdeutlichung des gehärteten Randbereichs,
- Figur 7: ein Diagramm zur Kerbschlagarbeit sowie zur Härte,
- Figur 8: ein Flussdiagramm einer Ausführungsform eines erfindungsgemäßen Herstellungsverfahrens des Fügeelements und
- Figur 9: ein Flussdiagramm einer Ausführungsform eines erfindungsgemäßen Verfahrens zum Verbinden von zwei Bauteilen mit dem Fügeelement.

### 5. Detaillierte Beschreibung der bevorzugten Ausführungsformen

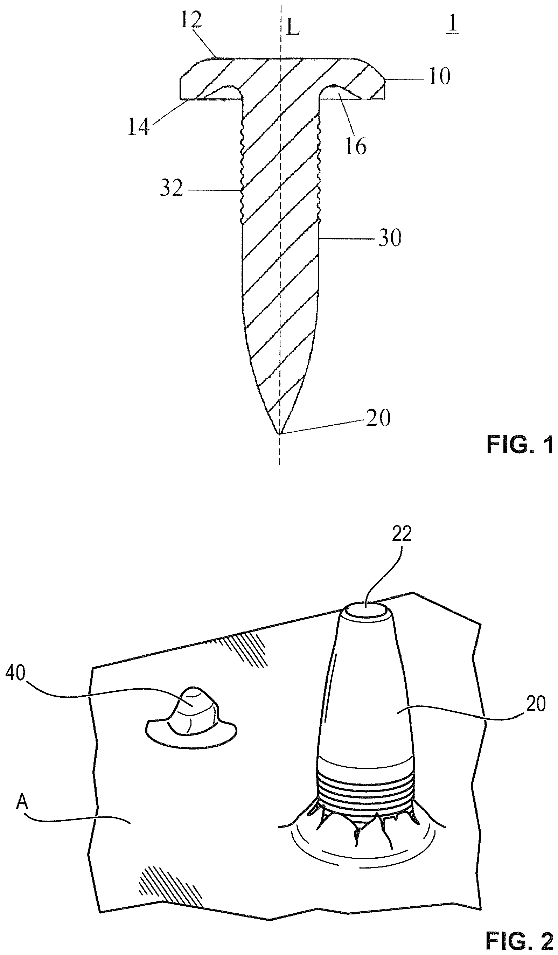

Bezugnehmend auf Figur 1 ist ein Fügeelement 1 in Form eines Setzbolzens dargestellt. Bezüglich der Details der Form wird auf DE 10 2006 002 238 A1 verwiesen, deren Inhalt in dieser Hinsicht durch Bezugnahme aufgenommen wird.

Anstelle des Setzbolzens als Fügeelement 1 sind auch Halbhohl-Stanznieten, Vollstanznieten, Blindnieten, Schrauben und dergleichen als Fügeelemente verwendbar und die nachfolgende Beschreibung gilt für diese Fügeelement entsprechend. Bezüglich der Details der Form wird zu Halbhohl-Stanznieten auf DE 10 2012 102 860 A1, DE 10 2015 118 888 A1 und DE 10 2019 102 383 A1, zu Vollstanz-Nieten auf DE 10 2018 128 455 und DE 10 2019 102 380 und zu Blindnieten auf DE 20 2005 005 536 U1 und EP 1 710 454 A1 verwiesen, die in dieser Hinsicht ebenfalls durch Bezugnahme aufgenommen werden.

Wieder Bezugnehmend auf Figur 1 weist das Fügeelement 1 in bekannter Weise einen Kopf 10 an einem ersten axialen Ende, einen Endbereich 20, in diesem Fall eine Spitze, an einem zweiten axialen Ende sowie einen dazwischen angeordneten Schaft 30 auf. Der Schaft 30 definiert eine Längsachse L des Fügeelements 1 zwischen dem ersten und dem zweiten axialen Ende, die aufgrund ihrer Lage auch als Mittellängsachse bezeichnet werden kann.

Der Kopf 10 des Fügeelements 1 weist eine ebene Oberseite 12, eine zylindrische Umfangsfläche und eine ebene Unterseite 14 auf. In der ebenen Unterseite 14 ist eine Ringnut 16 angrenzend an den Schaft 30 zur Aufnahme eines wulstförmigen Materialaufwurfs des kopfseitigen Bauteils vorhanden, was insbesondere beim Setzen des Fügeelements 1 in mindestens zwei Bauteile vorteilhaft ist.

Die Ringnut 16 weist angrenzend an den Schaft 30 eine abgerundete umlaufende Fläche auf, die tangential einerseits in den Schaft 30 und andererseits in eine konische Fläche übergeht. Auf diese Weise kann gerade wenn das Material des kopfzugewandten Bauteils entgegen der Fügerichtung aufsteigt dieser in der Ringnut 16 aufgenommen werden.

Der Schaft 30 ist zylindrisch ausgebildet und umfasst zumindest in einem Teilbereich eine Oberflächenprofilierung 32 zur Aufnahme von Material, vorzugsweise des kopfabgewandten Bauteils A. Auf diese Weise wird das Fügeelement 1 besonders verlässlich in mindestens einem Bauteil befestigt.

Unmittelbar an den Schaft 30 schließt sich der Endbereich 20, hier die Spitze, an.

Nun bezugnehmend auf Figur 2, die eine perspektivische Ansicht eines in ein Bauteil aus hoch- oder höchstfestem Stahl gesetzten Fügeelements zeigt, werden die Nachteile der bekannten Fügeelemente erläutert. Das verwendete Fügeelement weist eine Härte von 450 HV 10 auf, d.h. eine Härte nach Vickers (HV) von 450 bei einer Prüfkraft von 10 Kilopond. Die Verwendung des bekannten Fügeelements führt aufgrund der hohen Zugfestigkeit des Bauteils aus hoch- oder höchstfestem Stahl dazu, dass der Endbereich 26 des Fügeelements plastisch deformiert wird. Zusätzlich wird ein Butzen 40 aus dem Bauteil herausgetrennt. Dies ist aufgrund der Geräuschentwicklung aber auch bei nur einseitiger Zugänglichkeit des Bauteils nachteilig. Insgesamt ist die so hergestellte Verbindung daher als nicht in Ordnung zu qualifizieren.

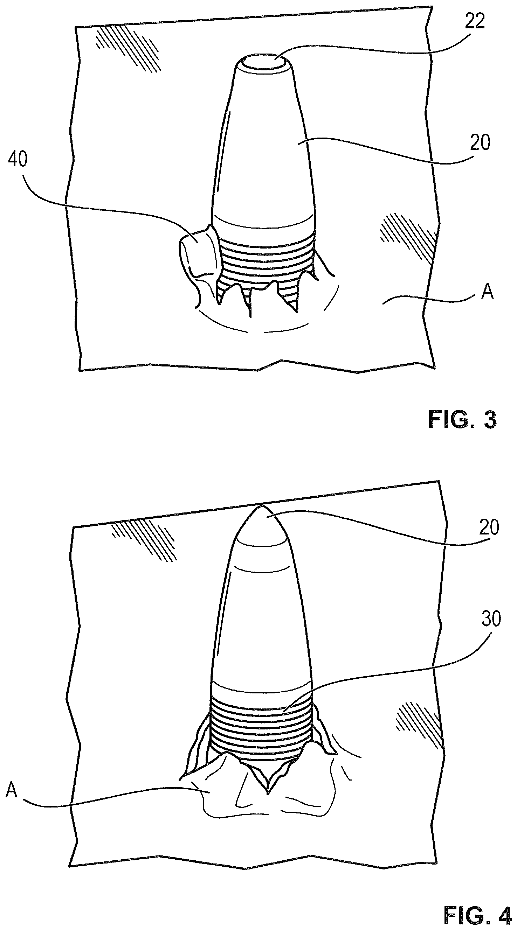

Figur 3 zeigt eine perspektivische Ansicht eines anderen in ein Bauteil aus hoch- oder höchstfestem Stahl gesetzten Fügeelements. Das hier verwendete Fügeelement weist die Härteklasse 8 mit einer Härte von 600 HV 10 auf. Die Erhöhung der Härte des Fügeelements hatte, neben einer Erhöhung der Sprödigkeit, eine Verringerung der Deformation des Endbereichs zur Folge. Wie aus Figur 3 ersichtlich, verbleibt der Butzen am Durchzug. Insbesondere dynamische Beanspruchungen könnten in diesem Fall ein Lösen des Butzens verursachen. Dies kann wiederum, insbesondere im Hinblick auf die Herstellung einer Kraftfahrzeug-Karosserie, zur Beschädigung der kathodischen Tauchlackierungs-Beschichtung führen, sodass bei einer Weiterverarbeitung des Bauteils mit dem Fügeelement in diesem Bereich kein Korrosionsschutz besteht. Somit ist auch diese Verbindung nachteilig, da sie für mögliche weitere Verarbeitungsschritte bzw. nachgelagerte Verarbeitungsschritte nicht geeignet ist.

Nun Bezugnehmend auf Figur 4 ist eine perspektivische Ansicht eines in ein Bauteil aus hoch- oder höchstfestem Stahl gesetzten Fügeelements gemäß einer Ausführungsform der Erfindung gezeigt. Daher weisen mindestens der Schaft und der Endbereich des Fügeelements, vorzugsweise das gesamte Fügeelement, einen gehärteten Randbereich 24 auf. Die Verwendung des gehärteten Randbereichs 24 führt dazu, dass Härten von bis zu 1.200 HV 10 erzielbar sind, in Abhängigkeit vom für das Fügeelement verwendeten Material.

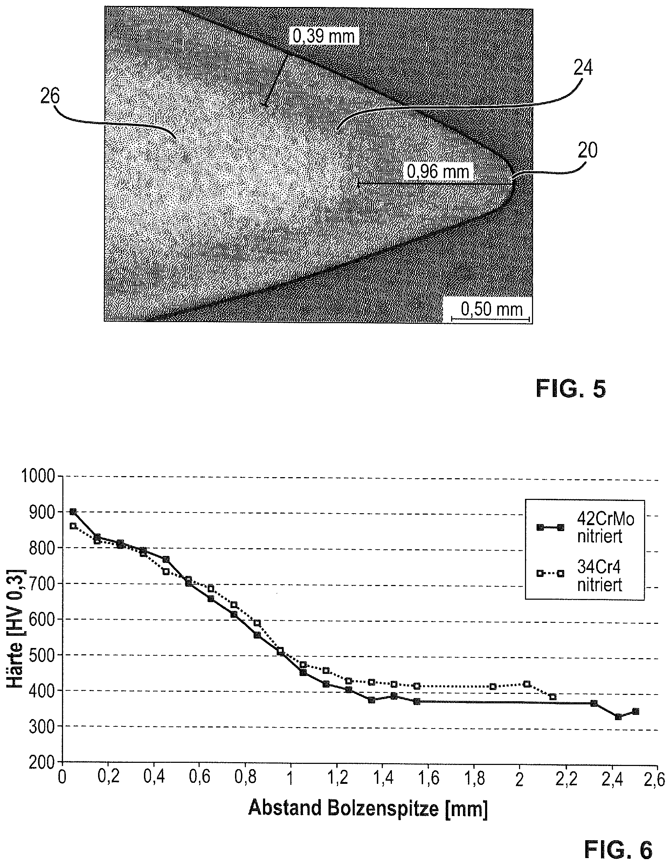

Figur 5 zeigt ein Schliffbild des Endbereichs 20 des Fügeelements, um die Veränderung im Material zu verdeutlichen. Die Härtung des Randbereichs 24 wurde mittels Nitrieren, insbesondere Gasnitrieren, erzielt. Neben dem Nitrieren ist jedes Verfahren bevorzugt, bei dem die bereitgestellten Fügeelemente als Schüttgut weiterverarbeitet werden können, also keine Einzelbearbeitung erforderlich ist.

Wie aus Figur 5 in Verbindung mit Figur 6 erkennbar, erstreckt sich der gehärtete Randbereich 24 in das Innere des Fügeelements bis zu einer Tiefe von ca. 1,2 mm. Der Härteverlauf ist in Figur 6 für die beiden Fügeelement-Materialien 34Cr4 und 42CrMo4 dargestellt. Mittels des Nitrierens wurden bei diesen Materialien Härten von bis zu 900 HV 0,3 erzielt, die zum Kern hin linear abnehmen. Die Nitriertiefe, d.h. die Tiefe der gehärteten Randschicht 24, kann mithilfe der Nitrierdauer prozesssicher eingestellt werden.

Durch die Verwendung randschichtgehärteter Fügeelemente sind Stahlwerkstoffe mit einer Zugfestigkeit von 1.200 MPa ohne Abtrennung eines Butzens und ohne Deformation des Endbereichs fügbar. Zudem sind beispielsweise Stähle, wie Warmumformstähle, mit einer Zugfestigkeit von bis zu 2.000 MPa, beispielsweise 1.500 MPa, in Dicken von ca. 1,2 mm fügbar.

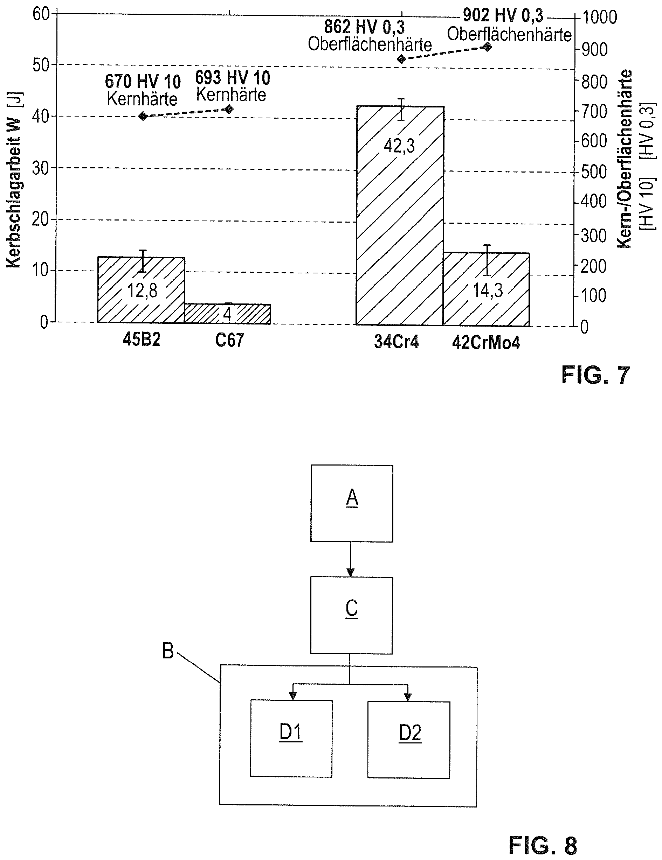

Neben der Erweiterung des Prozessfensters beim Setzen des Fügeelements liegt zudem eine erhöhte Kerbschlagarbeit und somit eine erhöhte Duktilität vor. Die Kerbschlagarbeit oder Kerbschlagzähigkeit ist ein Maß für die schlagartige und/oder dynamische Beanspruchung des Fügeelements. Diese Beanspruchung tritt neben dem Fügevorgang auch in der späteren Verbindungsstruktur auf, wenn das Fügeelement die mindestens zwei Bauteile unter Bauteilbelastungen zusammenhalten muss. Diese erhöhte Kerbschlagarbeit oder Kerbschlagzähigkeit ist auf den im Verhältnis zum gehärteten Randbereich 24 weichen Kern 26 im Inneren des Fügeelements 1 zurückzuführen. Beispielsweise kann durch die Umstellung des Werkstoffes von C67 auf 34Cr4 und die Anwendung des Nitrierverfahrens die Kerbschlagarbeit verzehnfacht werden, was in Figur 7 unter Berücksichtigung verschiedener Materialien gezeigt ist.

Ein Vorteil dieser Eigenschaft wirkt sich im Rahmen der späteren Verbindungsstruktur aus. So führt die Kombination aus hartem Randbereich und im Verhältnis dazu weichem Kern zu dem Effekt, dass das Fügeelement in weiteren Verarbeitungsschritten trotz des gehärteten Randbereichs prozesssicher befestigt ist. Dies gilt beispielsweise im Hinblick auf ein späteres Warmauslagern von zwei mittels des Fügeelements verbundenen Bauteilen.

Eine Verbindungsstruktur, in der das Fügeelement verwendet wird, besteht beispielsweise aus einem kopfzugewandten ersten Bauteil und einem kopfabgewandten zweiten Bauteil. Die Bauteile sind mittels einer Ausführungsform des erfindungsgemäßen Fügeelements verbunden. Hierbei kann ein Endbereich des Fügeelements beide Bauteile durchdringen. Alternativ ist der Endbereich des Fügeelements im kopfabgewandten Bauteil angeordnet. Ebenso kann das Fügeelement nur in eines der Bauteile gesetzt werden und anschließend mit dem zweiten Bauteil verschweißt werden.

Vorzugsweise besteht eines der Bauteile, insbesondere das kopfabgewandte Bauteil B aus einem Stahl mit einer Zugfestigkeit von mindestens 800 MPa. Somit wurde das kopfabgewandte oder untere Bauteil B aus einem hoch- oder höchstfesten Stahl hergestellt. Aufgrund der spezifischen Gestaltung des Fügeelements ist bei einem Setzen des Fügeelements in ein solches Bauteil B sowie beim Durchdringen des Bauteils B das Risiko einer plastischen Deformation des Endbereichs 20 sowie eines Bruchs des Fügeelements reduziert oder vorzugsweise beseitigt, wie oben dargelegt. Zudem verhindert das Fügeelement, dass ein Butzen aus dem zweiten Bauteil aus Stahl mit einer Zugfestigkeit von mindestens 800 MPa abgetrennt wird.

Figur 8 zeigt ein Flussdiagramm einer Ausführungsform eines Herstellungsverfahrens eines Fügeelements. Vorzugsweise besteht das Fügeelement zumindest im Schaft und Endbereich aus einem kaltumformbaren Stahl. Zudem wurde das Fügeelement vorteilhafterweise aus der folgenden Gruppe ausgewählt: Setzbolzen, Halbhohl-Stanznieten, Vollstanznieten, Blindnieten, Schrauben und dergleichen.

Im Rahmen der Herstellung erfolgt in einem ersten Schritt A ein Bereitstellen des Fügeelements, insbesondere Kaltumformen oder Drehen, mit einem Kopf an einem ersten axialen Ende, einem Endbereich an einem dem ersten axialen Ende gegenüberliegenden zweiten axialen Ende sowie einem zwischen dem Endbereich und dem Kopf angeordneten Schaft, der eine Längsachse des Fügeelements zwischen dem ersten und dem zweiten axialen Ende definiert.

In einem optionalen Schritt C erfolgt danach ein Vergüten von mindestens dem Schaft und dem Endbereich des Fügeelements, vorzugsweise des Fügeelements insgesamt. Im Hinblick auf die Details zum Vergüten wird auf die obigen Ausführungen verwiesen.

In einem abschließenden Schritt B findet ein Härten mindestens des Schafts und des Endbereichs des Fügeelements, vorzugsweise des gesamten Fügeelements, statt, so dass der Schaft und der Endbereich eine gehärtete Randschicht aufweisen, wodurch ein Material des Schafts und des Endbereichs im Inneren eine geringere Härte im Vergleich zu einer radial benachbarten Oberfläche aufweisen. Der Schritt des Härtens umfasst dabei entweder eines von Nitrieren, Induktionshärten, Flammhärten, Laserstrahlhärten, Elektronenstrahlhärten oder Aufkohlen (Schritt D1) oder der Schritt des Härtens umfasst das Aufbringen einer Beschichtung mindestens am Schaft und Endbereich des Fügeelements (Schritt D2). Auf diese Weise wird gemäß einer Ausführungsform das oben beschriebene erfindungsgemäße Fügeelement hergestellt.

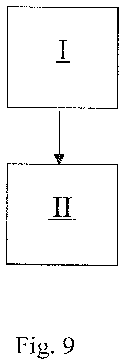

Abschließend und Bezug nehmend auf Figur 9 ist ein Flussdiagramm einer Ausführungsform eines Verfahren zum Verbinden eines ersten Bauteils A mit einem zweiten Bauteil B mittels einer Ausführungsform eines Fügeelements gezeigt. In einem ersten Schritt I erfolgt ein Anordnen des ersten A und des zweiten Bauteils B übereinander. In einem sich daran anschließenden zweiten Schritt II wird ein Setzen des Fügeelements in die Anordnung aus übereinander angeordnetem erstem und zweitem Bauteil durchgeführt, wobei das Setzen des Fügeelements im Wesentlichen drehungsfrei erfolgt. Das im Wesentlichen drehungsfreie Setzen kann auch als ausschließlich translatorisches Setzen des Fügeelements bezeichnet werden.

Das erste Bauteil ist beim Setzen benachbart zum Kopf und das zweite Bauteil benachbart zur Spitze des Fügeelements angeordnet und beide Bauteile sind im Fügebereich nicht vorgelocht, wie bereits diskutiert. Das zweite Bauteil besteht insbesondere aus einem Stahl mit einer Zugfestigkeit von mindestens 800 MPa. Ein Durchdringen des zweiten Bauteils B erfolgt ohne Abtrennung eines Butzens. Gerade die spezifische Gestaltung des erfindungsgemäßen Fügeelements ermöglicht es, dass kein Butzen aus dem zweiten Bauteil aus Stahl mit einer Zugfestigkeit von mindestens 800 MPa abgetrennt wird.

### 6. Bezugszeichenliste

- 1: Fügeelement
- 10: Kopf
- 12: Oberseite
- 14: Unterseite
- 16: Ringnut
- 20: Endbereich
- 22: plastisch deformierter Endbereich
- 24: gehärtete Randschicht
- 26: Kern
- 30: Schaft
- 32: Oberflächenprofilierung
- 40: Butzen

- A: Bauteil
- L: Längsachse

## Patentansprüche

1. Ein Fügeelement zum Herstellen einer Verbindung zwischen mindestens zwei Bauteilen, welches aufweist:
a. einen Kopf an einem ersten axialen Ende,
b. einen Endbereich an einem dem ersten axialen Ende gegenüberliegenden zweiten axialen Ende sowie
c. einen zwischen dem Endbereich und dem Kopf angeordneten Schaft, der eine Längsachse des Fügeelements zwischen dem ersten und dem zweiten axialen Ende definiert, wobei
d. mindestens der Schaft und der Endbereich des Fügeelements eine gehärtete Randschicht aufweisen, so dass ein Material des Schafts und des Endbereichs im Inneren eine geringere Härte im Vergleich zu einer benachbarten Oberfläche der Randschicht aufweisen.

2. Das Fügeelement gemäß Patentanspruch 1, wobei mindestens das Material des Schafts und des Endbereichs vergütet ist.

3. Das Fügeelement gemäß einem der vorhergehenden Patentansprüche, das ausgewählt ist aus der Gruppe bestehend aus: Setzbolzen, Halbhohl-Stanznieten, Vollstanznieten, Blindnieten und Schrauben.

4. Das Fügeelement gemäß einem der vorhergehenden Patentansprüche, wobei die Härtung der Randschicht erzielt wurde mittels Nitrieren, Induktionshärten, Flammhärten, Laserstrahlhärten, Elektronenstrahlhärten oder Aufkohlen.

5. Das Fügeelement gemäß einem der Patentansprüche 1 bis 3, bei dem mindestens der Schaft und der Endbereich des Fügeelements eine Beschichtung mit einem Material aufweist, das eine größere Härte als das Material des Schafts und des Endbereichs bereitstellt.

6. Eine Verbindungsstruktur bestehend aus mindestens einem ersten Bauteil und einem zweiten Bauteil, die mittels eines Fügeelements gemäß einem der vorhergehenden Patentansprüche verbunden sind.

7. Die Verbindungsstruktur gemäß Patentanspruch 6, bei dem das erste Bauteil benachbart zum Kopf und das zweite Bauteil benachbart zum Endbereich des Fügeelements angeordnet sind, wobei das zweite Bauteil aus einem Stahl, insbesondere einem Warmumformstahl, mit einer Zugfestigkeit von mindestens 800 MPa, insbesondere mit einer Zugfestigkeit zwischen 800 MPa und 2.000 MPa oder zumindest zwischen 800 MPa und 1.500 MPa, besteht.

8. Ein Herstellungsverfahren eines Fügeelements gemäß einem der Patentansprüche 1 bis 5, das die folgenden Schritte umfasst:
a. Bereitstellen des Fügeelements, insbesondere Kaltumformen oder Drehen, mit einem Kopf an einem ersten axialen Ende, einem Endbereich an einem dem ersten axialen Ende gegenüberliegenden zweiten axialen Ende sowie einem zwischen dem Endbereich und dem Kopf angeordneten Schaft, der eine Längsachse des Fügeelements zwischen dem ersten und dem zweiten axialen Ende definiert, und
b. Härten mindestens des Schafts und des Endbereichs des Fügeelements, so dass der Schaft und der Endbereich eine gehärtete Randschicht aufweisen, wodurch ein Material des Schafts und des Endbereichs im Inneren eine geringere Härte im Vergleich zu einer radial benachbarten Oberfläche aufweisen.

9. Das Herstellungsverfahren gemäß Patentanspruch 8, das vor dem Härten des Fügeelements den weiteren Schritt aufweist:
c. Vergüten von mindestens dem Schaft und dem Endbereich des Fügeelements.

10. Das Herstellungsverfahren gemäß einem der Patentansprüche 8 oder 9, wobei der Schritt des Härtens umfasst:
d1. Nitrieren, Induktionshärten, Flammhärten, Laserstrahlhärten, Elektronenstrahlhärten oder Aufkohlen oder
d2. Aufbringen einer Beschichtung mindestens am Schaft und Endbereich des Fügeelements.

11. Das Herstellungsverfahren gemäß einem der Patentansprüche 8 bis 10, wobei das Fügeelement ausgewählt ist aus der Gruppe bestehend aus: Setzbolzen, Halbhohl-Stanznieten, Vollstanznieten, Blindnieten und Schrauben.

12. Das Herstellungsverfahren gemäß einem der Patentansprüche 8 bis 11, wobei ein Material für das Fügeelement einen kaltumformbaren Stahl umfasst.

13. Ein Verfahren zum Verbinden mindestens eines ersten Bauteils mit einem zweiten Bauteil mittels eines Fügeelements gemäß einem der Patentansprüche 1 bis 5, umfassend die Schritte:
a. Anordnen des ersten und des zweiten Bauteils übereinander,
b. Setzen des Fügeelements in die Anordnung aus übereinander angeordnetem erstem und zweitem Bauteil, wobei das Setzen des Fügeelements im Wesentlichen drehungsfrei erfolgt.

14. Das Verfahren gemäß Patentanspruch 13, bei dem das erste Bauteil benachbart zum Kopf und das zweite Bauteil benachbart zum Endbereich des Fügeelements angeordnet sind, wobei das zweite Bauteil aus einem Stahl, insbesondere einem Warmumformstahl, mit einer Zugfestigkeit von mindestens 800 MPa, insbesondere mit einer Zugfestigkeit zwischen 800 MPa und 2.000 MPa oder zumindest zwischen 800 MPa und 1.500 MPa, besteht.

15. Das Verfahren gemäß Patentanspruch 13 oder 14, bei dem das erste Bauteil benachbart zum Kopf und das zweite Bauteil benachbart zum Endbereich des Fügeelements angeordnet sind, wobei ein Durchdringen des zweiten Bauteils ohne Abtrennung eines Stanzbutzens erfolgt.
